# FASCICULE DE BREVET EUROPEEN

(11) **EP 0 562 949 B1**
(45) Date de publication et mention de la délivrance du brevet: **24.07.1996**
(21) Numéro de dépôt: 93400748.5
(22) Date de dépôt: 23.03.1993
(51) Int. Cl.: F16G 13/14, F16G 15/02

(54) **Procédé d'assemblage de deux extrémités d'éléments en vis à vis et maillons démontables réalisés par ce procédé**
Verfahren zur Verbindung zweier einander gegenüberliegender Elementen-Enden sowie durch dieses Verfahren hergestellte zerlegbare Glieder
Method for assembling the extremities of two elements placed in front of each other and dismountable chain link produced with such method

(30) Priorité: 24.03.1992 FR 9203517
(43) Date de publication de la demande: 29.09.1993
(73) Titulaire: FORGES DE FRESNES, F-59970 Fresnes-sur-Escaut (FR)
(72) Inventeur: Deramaux Jean-Michel, 59880 Saint-Saulve (FR); Caron, Bernard, 59300 Aulnoye Les Valenciennes (FR)
(74) Mandataire: Bloch, Gérard

(56) Documents cités:
- WO-A-81/00607
- FR-A- 656 565
- GB-A- 1 458 875
- US-A- 1 386 732
- US-A- 1 776 515
- US-A- 2 400 854
- US-A- 2 999 352

## Description

La présente invention concerne un procédé d'assemblage de deux extrémités d'éléments en vis à vis, et plus particulièrement un tel procédé dans lequel l'assemblage est réalisé à l'aide de deux demi coquilles réunies par des organes d'assemblage, ainsi qu'un maillon démontable réalisé par ce procédé.

Il existe déjà des maillons démontables assemblables par tenons et mortaises et utilisés pour lier entre eux des tronçons de chaînes de mouillage de navires ou de plate-formes pétrolières (voir, par example, US-A-2 999 352 et US-A-1 776 515).

Dans un autre type de maillon démontable, des demi maillons sont maintenus et retenus à l'aide de deux coquilles fixées par des vis, les coquilles présentant des épaulements coopérant avec des saillies formées au extrémités libres des demi maillons (voir, par example, WO-A-81/00 607 et GB-A-1 458 875).

Pour présenter une bonne résistance, ces deux types de maillons nécessitent un usinage particulièrement soigné et précis des parties venant en contact afin que l'assemblage présente le moins de jeu possible pour une bonne résistance à la traction et la fatigue. Ces usinages nombreux et précis sont d'un coût relativement élevé.

La présente invention vise à fournir un procédé d'assemblage et un maillon démontable réalisé par ce procédé, ne nécessitant pratiquement pas d'usinage des parties en contact, et par conséquent d'un coût inférieur à celui des procédés et des maillons connus.

A cet effet, l'invention à tout d'abord pour objet un procédé d'assemblage de deux extrémités d'éléments en vis à vis à l'aide de deux demi coquilles réunies par des organes d'assemblage tels que des vis, caractérisé par le fait qu'il comprend les étapes consistant à:
- former des reliefs soit à la surface interne des demi coquilles, soit à la surface externe des extrémités des éléments,
- mettre les demi coquilles en place sur les extrémités des éléments,
- forger des reliefs sur les organes originellement lisses par estampage direct sur les organes possédant les reliefs,
- réunir les demi coquilles par lesdits organes d'assemblage.

Par "originellement lisse", on entend dans la présente description et dans les revendications annexées que la surface de ces organes n'a subi aucun usinage. En revanche, il est possible de leur faire subir un préformage à la forge.

Les reliefs ne sont donc formés à l'origine que sur une des surfaces en contact, et les reliefs correspondant sur l'autre surface sont directement formés par estampage à partir de ces premiers reliefs. On est ainsi assure d'un assemblage sans jeu permettant d'obtenir la meilleure résistance à la traction et à la fatigue.

On a par ailleurs constaté que, bien qu'obtenus sans usinage, les reliefs formés par estampage sur la surface originellement lisse sont de bonne qualité et que le remontage des éléments après leur démontage ne présente pas de difficulté particulière.

Dans un mode de réalisation particulier, les reliefs sont originellement formés sur les extrémités des éléments, les surfaces internes des demi coquilles étant donc lisses ou seulement préformées à l'origine puis forgées par estampage.

La présente invention a également pour objet un maillon démontable pour l'assemblage et le désassemblage de tronçons de chaînes, comprenant au moins deux extrémités d'éléments de maillon en vis à vis et deux demi coquilles réunies entre elles par des organes d'assemblage pour assembler lesdites extrémités, dans lequel ces extrémités d'éléments de maillon sont assemblées par le procédé décrit ci-dessus.

Outre les avantages précités, les maillons selon l'invention peuvent avoir une moindre épaisseur pour une section donnée du fait d'une meilleure répartition des efforts et du non-endommagement des fibres du métal par les outils. En outre, ils peuvent être aisément assemblés et désassemblés sur site.

Dans un premier mode de réalisation, ces maillons sont formés de deux demi maillons dont les extrémités sont deux à deux en vis à vis, les deux demi maillons étant assemblés par deux demi coquilles de manière à former un pont dans l'ouverture du maillon.

Dans un autre mode de réalisation, ces maillons sont formés d'un anneau ouvert dont les deux extrémités en vis à vis sont réunies par deux demi coquilles.

Plus particulièrement chaque demi coquille peut comporter une saillie en direction de l'autre demi coquille, les deux saillies étant complémentaires et toutes deux traversées par une tige d'assemblage, chaque saillie étant formé par un organe engagé dans un trou de la demi coquille respective et maintenue dans ce trou par forgeage.

Soit la surface externe de l'organe en saillie, soit la surface interne du trou, possède avantageusement des reliefs qui sont reportés par estampage sur l'autre surface lors du forgeage.

Selon un autre aspect de l'invention, celle-ci à pour objet un procédé de fabrication d'un maillon démontable pour l'assemblage et le désassemblage de tronçons de chaînes, ledit maillon comprenant au moins deux extrémités d'éléments de maillon en vis-à-vis et deux demi coquilles réunies entre-elles par des organes d'assemblage pour assembler lesdites extrémités, caractérisé par le fait qu'il comprend les étapes consistant à :
- former des reliefs soit à la surface interne des demi coquilles, soit à la surface externe des extrémités d'éléments des maillons,
- percer un trou dans chacune des demi coquilles dans leur partie destinée à se trouver en vis-à-vis,
- former deux demi organes d'assemblage complémentaires ayant chacun une extrémité susceptible de pénétrer dans un desdits trou,
- former des reliefs soit à la surface interne desdits trous, soit à la surface externe desdites extrémités des organes d'assemblage,
- placer chacune desdites extrémités des organes d'assemblage dans un desdits trous et mettre les demi coquilles en place sur les extrémités d'éléments de maillon,
- forger des reliefs sur les parties originellement lisses en vis-à-vis des reliefs préformés par estampage direct sur lesdits reliefs,
- réunir les demi coquilles par une tige d'assemblage traversant deux trous alignés formés dans des parties chevauchantes des demi organes d'assemblage.

Lesdits trous alignés peuvent être percés après forgeage à partir de l'extérieur du maillon.

Ils peuvent également être percés avant forgeage et éventuellement utilisés pour maintenir provisoirement assemblé les demis organes d'assemblage.

Dans un mode de mise en oeuvre particulier de ce procédé, destiné à la fabrication d'un maillon composé de deux demi maillons possédant deux couples d'extrémité en vis-à-vis, on forme des reliefs soit à la surface interne d'une gaine, soit à la surface externe des extrémités de l'autre couple d'extrémité, on place lesdites autres extrémités dans le fourreau et on forge ces autres extrémités simultanément aux extrémités citées en premier lieu.

On décrira maintenant à titre d'exemple non limitatif des modes de réalisation particuliers de l'invention en référence aux dessins annexés dans lesquels :
- la figure 1 est une vue de dessus d'un maillon démontable selon l'invention,
- la figure 2 en est une vue de face,
- la figure 3 est une vue en perspective d'une demi coquille après estampage, et
- la figure 4 est une vue de dessus d'un maillon selon un autre mode de réalisation de l'invention.
- la figure 5 est une vue en plan d'un demi maillon selon encore un autre mode de réalisation de l'invention,
- la figure 6 représente un fourreau destiné à l'assemblage de deux demi maillons tels que celui de la figure 5.
- la figure 7 est une vue en plan d'une demi coquille correspondant au demi maillon de la figure 5,
- les figures 8a et 8b sont des vues en perspective de deux demi pions destinés à l'assemblage des éléments des figures 5 et 7,
- la figure 9 représente les demi pions des figures 8a et 8b après leur assemblage,
- la figure 10 est une vue en coupe selon la ligne X-X de la figure 9, et
- la figure 11 représente un maillon assemblé avec des éléments tels que représentés aux figures 5 à 10.

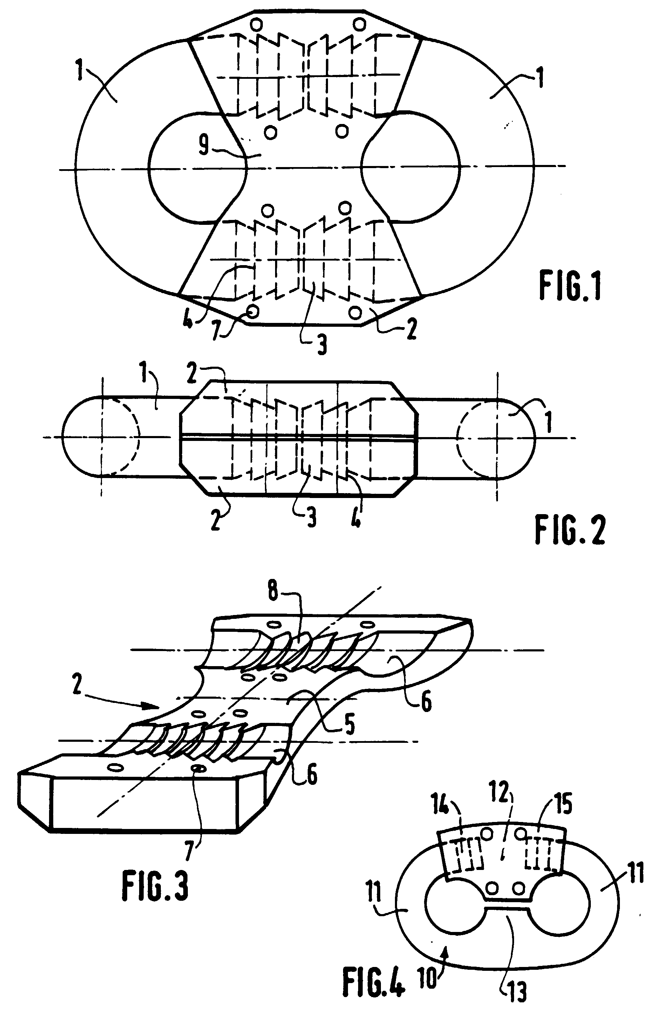

Le maillon des figures 1 et 2 est composé de deux demi maillons 1 et de deux demi coquilles (2).

Les demi maillons 1 peuvent être obtenus à partir de barres rondes laminées sciées à longueur.

On forme ensuite aux extrémités de ces barres des reliefs (3) qui, dans le mode de réalisation représenté aux dessins, sont constitués de rainures annulaires à section triangulaire formant des épaulements (4) sensiblement perpendiculaires à l'axe de la barre et orientés vers le milieu de la barre.

Des cannelures annulaires à section carrée ou rectangulaire sont bien entendu également possibles.

On peut également former les reliefs (3) en filetant les extrémités des barres.

En variante, les demi maillons peuvent être réalisés par estampage en matrice afin d'obtenir facilement des formes d'égale résistance, et de former directement les reliefs 3.

Les demi maillons pourraient également être obtenus par moulage d'acier.

Une fois les reliefs (3) formés, les barres sont cintrées en U pour obtenir les demi maillons (1).

Chaque demi coquille (2) se présente sensiblement sous la forme d'une plaque présentant au moins une surface sensiblement plane (5) dans laquelle sont formées deux rainures parallèles semi cylindriques (6), de même diamètre que les barres (1) et espacées d'une distance égale à la distance des branches des U des demi maillons.

Ces demi coquilles sont réalisées dans tout métal susceptible d'être forgé, les surfaces des rainures (6) étant lisses à l'origine, ou éventuellement préformées.

Les demi coquilles (2) présentent par ailleurs des trous (7) permettant l'assemblage ultérieur de deux demi coquilles placées en vis à vis.

Les demi coquilles (2) sont ensuite portées à la température de forgeage et deux demi coquilles sont mises en place sur deux demi maillons (1) dont les extrémités correspondantes ont été amenées en vis à vis.

L'assemblage ainsi réalisé est placé dans une presse et estampé de manière à former à la surface intérieure des rainures (6) des reliefs (8) complémentaires des reliefs (3) de la surface des extrémités des demi maillons (1).

Les deux demi coquilles (2) sont ensuite assemblées par vissage.

Il en résulte un maillon dont l'ouverture présente un pont (9) formé par les deux demi coquilles, ce maillon ne présentant que de faibles surépaisseurs par rapport à un maillon de chaîne d'une seule pièce et passant ainsi sans difficulté dans les treuils.

Ce maillon peut par ailleurs être aisément démonté et remonté.

Dans le mode de réalisation de la figure (4), l'élément de base du maillon est une pièce (10) en oméga présentant deux parties latérales (11) dont les extrémités sont repliées en vis à vis de manière à délimiter entre elles un espace (12), et une partie centrale formant une saillie (13) en direction de l'espace (12). Les extrémités des parties latérales (11) présentent des reliefs (14) du même type que les reliefs (3) précédemment décrits.

Les deux demi coquilles (15) présentent en plan une forme en T et comportent chacune une rainure semi cylindrique dont la surface est lisse à l'origine.

Les deux demi coquilles (15) sont montées sur les extrémités des parties latérales (11) de la pièce (10) puis forgées comme précédemment et assemblées par vis.

Il en résulte un maillon démontable présentant la même forme générale que celui de la figure (1), la partie centrale du T des demi coquilles (15) rejoignant sensiblement la saillie (13).

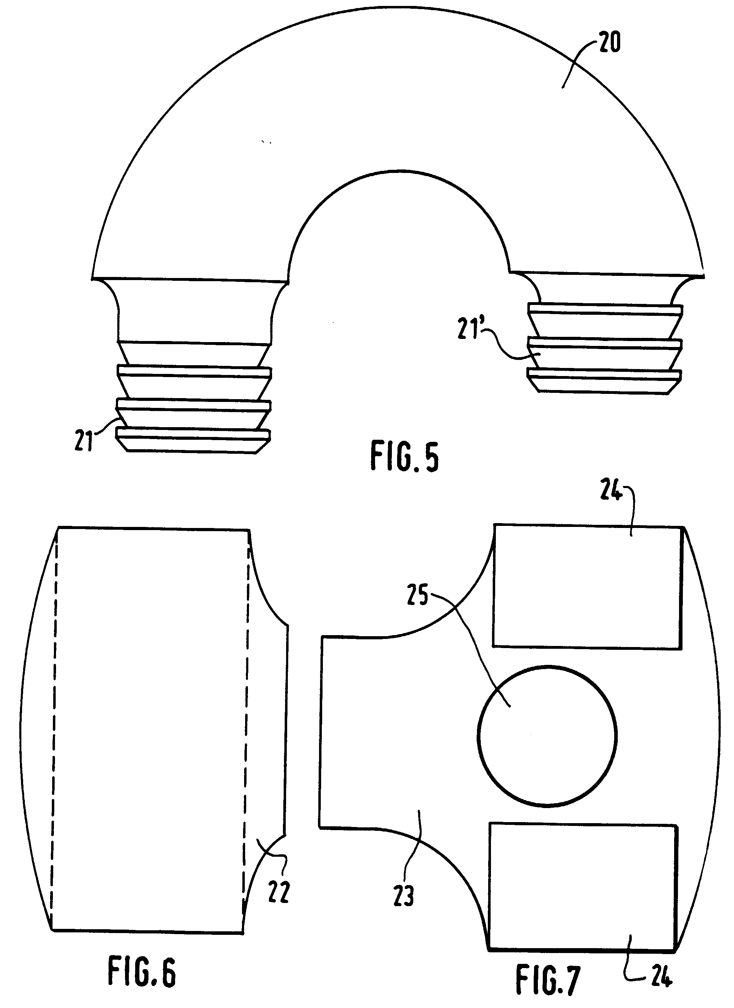

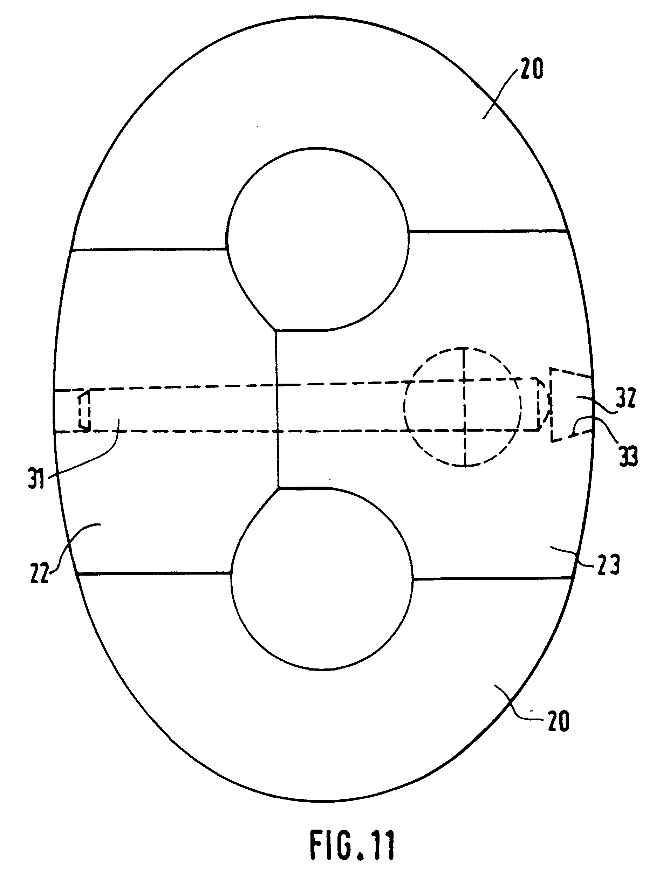

On décrira maintenant le mode de réalisation des figures 5 à 11.

Le maillon selon ce mode de réalisation est formé de deux demi maillons (20) similaires aux demi maillons (1) des figures 1 et 2 comportant donc des reliefs à chacune de leurs extrémités (21) et (21') respectivement.

Ce maillon est également formé à l'aide d'un fourreau (22) et de deux demi coquilles (23).

Le fourreau (22) est percé de manière à former une gaine dans laquelle peuvent s'engager les deux extrémités (21) en vis-à-vis de deux demi maillons (20).

Chaque demi coquille (23) comporte pour sa part deux logements (24) pour les deux autres extrémités (21') des deux demi maillons ainsi qu'un trou à fond plat (25) dont la fonction sera décrite ci-après.

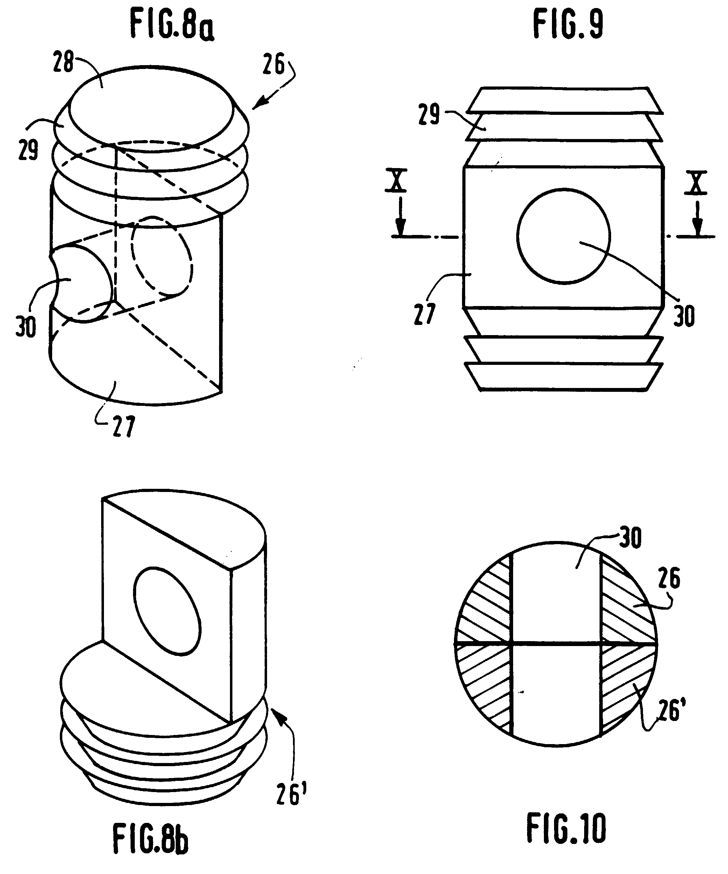

Deux demi coquilles (23) sont assemblées à l'aide de deux demi pions d'assemblage (26) et (26') tels que représentés aux figures 8a, 8b, 9 et 10.

Chaque demi pion comporte un corps semi-cylindrique (27) et une tête (28) généralement cylindrique de même diamètre et coaxial au corps (27). La tête (28) comporte toutefois des reliefs (29) similaires à ceux précédemment décrits. Le corps semi-cylindrique (27) de chacun des pions (26) est par ailleurs percé d'un trou (30) d'axe perpendiculaire à l'axe du cylindre enveloppe du pion et à la face plane du corps.

Deux demi pions quelconques sont donc complémentaires et, lorsqu'ils sont assemblés comme représentés aux figures 9 et 10, ils forment sensiblement un cylindre dont les extrémités sont munies de reliefs et qui est percé d'un trou perpendiculaire à son axe.

L'assemblage du maillon s'effectue de la manière suivante.

Tout d'abord deux demi pions sont assemblés, et de préférence provisoirement rivetés dans leurs trous (30).

Le pion cylindrique ainsi formé est placé dans le trou (25) avec l'axe du trou (30) orienté transversalement par rapport au maillon, c'est-à-dire perpendiculairement aux extrémités (21) et (21') des demi maillons.

Les extrémités (21') de deux demi maillons sont ensuite placés dans les logements correspondant (24) tandis que leurs extrémités (21) sont engagés dans le trou du fourreau (22). La demi coquille supérieure est alors mise en place, son trou (25) recevant l'extrémité libre du pion cylindrique et ses logements (24) recouvrant les extrémités (21) des demi maillons (20).

Bien entendu, préalablement à cette mise en place, les demi coquilles (23) et le manchon (22) ont été portés à la température de forgeage. L'ensemble est alors forgé à la presse ce qui pour effet de forger des reliefs à la surface intérieure des logements (24), du fourreau (22) et des trous (25).

Le rivetage d'origine des deux pions (26) rend par conséquent solidaire l'ensemble des demi coquilles (23) ce qui permet de réduire les déformations dues au refroidissement ou aux traitements thermiques éventuels de l'ensemble.

On désolidarise ensuite l'ensemble en perçant un trou le long de l'axe des trous (30) mais d'un diamètre supérieur à ces trous. Ce trou est prolongé jusqu'à l'autre extrémité transversale du maillon et traverse le fourreau (22). Ce trou est percé coniquement en maintenant les éléments sous presse, après quoi on y place une goupille conique (31) bloquée par une goutte de plomb (32) maintenue par une contre dépouille (33) à l'entrée du trou conique.

Le démontage du maillon s'effectue très simplement et très rapidement en chassant simplement la goupille (31) à partir de son extrémité la plus étroite.

L'opération d'assemblage s'est effectuée très aisément en une seule formation de forgeage.

## Revendications

1. Procédé d'assemblage de deux extrémités d'éléments (1) en vis à vis à l'aide de deux demi coquilles (2) réunies par des organes d'assemblage, caractérisé par le fait qu'il comprend les étapes consistant à :
- former des reliefs (3) soit à la surface interne des demi coquilles soit à la surface externe des extrémités des éléments;
- mettre les demi coquilles en place sur les extrémités des éléments;
- forger des reliefs sur les organes originellement lisses par estampage direct sur les organes possédant les reliefs;
- réunir les demi coquilles par lesdits organes d'assemblage.

2. Procédé selon la revendication 1, dans lequel les reliefs sont originellement formés sur les extrémités des éléments.

3. Maillon démontable pour l'assemblage et le désassemblage de tronçons de chaînes, comprenant au moins deux extrémités d'éléments de maillon (1) en vis à vis et deux demi coquilles (2) réunies entre elles par des organes d'assemblage tels que des vis pour assembler lesdites extrémités, dans lequel lesdites extrémités d'éléments de maillon sont assemblées par le procédé selon l'une quelconque des revendications 1 et 2.

4. Maillon selon la revendication 3, formé de deux demi maillons (1) dont les extrémités sont deux à deux en vis à vis, les deux demi maillons étant assemblés par deux demi coquilles (2) de manière à former un pont (9) dans l'ouverture du maillon.

5. Maillon selon la revendication 3, formé d'un anneau (10) ouvert dont les deux extrémités en vis à vis sont réunies par deux demi coquilles (15).

6. Maillon selon l'une quelconque des revendications 3 à 5, dans lequel chaque demi coquille comporte une saillie en direction de l'autre demi coquille, les deux saillies étant complémentaires et toutes deux traversés par une tige d'assemblage, chaque saillie étant formée par un organe engagé dans un trou de la demi coquille respective et maintenu dans ce trou par forgeage.

7. Maillon selon la revendication 6, dans lequel soit la surface externe dudit organe, soit la surface interne dudit trou possède des reliefs qui sont reportés par estampage sur l'autre surface lors du forgeage.

8. Procédé de fabrication d'un maillon démontable pour l'assemblage et le désassemblage de tronçons de chaînes, ledit maillon comprenant au moins deux extrémités d'éléments de maillon en vis-à-vis et deux demi coquilles réunies entre elles par des organes d'assemblage pour assembler lesdites extrémités, caractérisé par le fait qu'il comprend les étapes consistant à :
- former des reliefs soit à la surface interne des demi coquilles, soit à la surface externe des extrémités d'éléments de maillon,
- percer un trou dans chacune des demi coquilles, dans leurs parties destinées à se trouver en vis-à-vis,
- former deux demi organes d'assemblage complémentaires, ayant chacun une extrémité susceptible de pénétrer dans un desdits trous,
- former des reliefs soit à la surface interne desdits trous, soit à la surface externe desdites extrémités des organes d'assemblage,
- placer chacune desdites extrémités des organes d'assemblage dans un desdits trous et mettre les demi coquilles en place sur les extrémités d'éléments de maillon,
- forger des reliefs sur les parties originellement lisses en vis-à-vis des reliefs préformés, par estampage direct sur lesdits reliefs,
- réunir les demi coquilles par une tige d'assemblage traversant deux trous alignés formés dans des parties chevauchantes des demi organes d'assemblage.

9. Procédé selon la revendication 8, dans lequel lesdits trous alignés sont percés après forgeage, à partir de l'extérieur du maillon.

10. Procédé selon la revendication 8, dans lequel lesdits trous sont percés avant forgeage, et utilisés pour maintenir provisoirement assemblés les demi organes d'assemblage.

11. Procédé selon l'une quelconque des revendications 8 à 10, pour la fabrication d'un maillon composé de deux demi maillons possédant deux couples d'extrémités en vis-à-vis, dans lequel on forme des reliefs soit à la surface interne d'une gaine, soit à la surface externe des extrémités de l'autre couple d'extrémités, on place lesdites autres extrémités dans le fourreau, et on forge ces autres extrémités simultanément aux extrémités citées en premier lieu.

## Claims

1. Method for assembling two ends of elements (1) facing each other with the aid of two half-shells (2) joined together by assembly members, characterized in that it comprises the steps consisting in:
- forming reliefs (3) either at the internal surface of the half-shells or at the external surface of the ends of the elements;
- putting the half-shells in place on the ends of the elements;
- forging reliefs on the originally smooth members by direct stamping on the members which have the relief;
- joining the half-shells together using the said assembly members.

2. Method according to Claim 1, in which the reliefs are originally formed on the ends of the elements.

3. Dismantlable chain link for assembling and disassembling lengths of chain, comprising at least two ends of chain link element (1) facing each other and two half-shells (2) joined together by assembly members such as screws for assembling the said ends, in which the said ends of chain link elements are assembled using the method according to either one of Claims 1 and 2.

4. Chain link according to Claim 3, formed of two half-links (1), the ends of which face one another in pairs, the two half-links being assembled using two half-shells (2) so as to form a bridge (9) in the opening of the chain link.

5. Chain link according to Claim 3, formed of an open ring (10) of which the two ends which face each other are joined together by two half-shells (15).

6. Chain link according to any one of Claims 3 to 5, in which each half-shell includes a projection towards the other half-shell, the two projections being complementary and both having an assembly rod passing through them, each projection being formed by a member engaged in a hole of the respective half-shell and held fast in this hole by forging.

7. Chain link according to Claim 6, in which either the external surface of the said member or the internal surface of the said hole has reliefs which are applied by stamping on the other surface at the time of forging.

8. Method for manufacturing a dismantlable chain link for assembling and disassembling lengths of chain, the said chain link comprising at least two ends of chain link element facing each other and two half-shells joined together by assembly members for assembling the said ends, characterized in that it comprises the steps consisting in:
- forming reliefs either at the internal surface of the half-shells or at the external surface of the ends of chain link element,
- piercing a hole in each of the half-shells, in those parts of them which are to face each other,
- forming two complementary assembly half-members each one having an end capable of penetrating inside one of the said holes,
- forming reliefs either at the internal surface of the said holes or at the external surface of the said ends of the assembly members,
- placing each of the said ends of the assembly members in one of the said holes and putting the half-shells in place over the ends of chain link element,
- forging reliefs on the originally smooth parts facing each other of the preformed reliefs, by direct stamping on the said reliefs,
- joining the half-shells together using an assembly rod passing through two aligned holes formed in overlapping parts of the assembly half-members.

9. Method according to Claim 8, in which the said aligned holes are pierced after forging, from the outside of the chain link.

10. Method according to Claim 8, in which the said holes are pierced before forging and used to keep the two assembly half-members temporarily assembled.

11. Method according to any one of Claims 8 to 10, for manufacturing a chain link composed of two half-links having two pairs of ends facing each other, in which method reliefs are formed either at the internal surface of a sleeve or at the external surface of the ends of the other pair of ends, the said other ends are placed in the sleeve tube, and these other ends are forged at the same time as the first-mentioned ends.

## Patentansprüche

1. Verfahren zum Verbinden zweier Enden von einander gegenüberliegenden Bauteilen (1) mit Hilfe zweier durch Verbindungselemente verbundener Halbschalen (2),
**dadurch gekennzeichnet, daß**
es die folgenden Schritte umfaßt:
Ausbilden von Reliefs (3) entweder auf der inneren Oberfläche der Halbschalen oder auf der äußeren Oberfläche der Enden der Bauteile;
Aufsetzen der Halbschalen auf den Enden der Bauteile;
Schmieden von Reliefs in die ursprünglich glatten Elemente durch direkte Prägeeinwirkung auf die, die Reliefs aufweisenden Elemente;
Verbinden der Halbschalen durch besagte Verbindungselemente.

2. Verfahren nach Anspruch 1, wobei die Reliefs ursprünglich auf den Enden der Bauteile ausgebildet werden.

3. Demontierbares Kettenglied zum Verbinden und Trennen von Kettenabschnitten, mit wenigstens zwei einander gegenüberliegenden Enden von Kettengliedteilen (1) und zwei Halbschalen (2), die durch Verbindungselemente, zum Beispiel Schrauben, miteinander verbunden sind, um besagte Enden zu verbinden, wobei besagte Enden der Kettengliedteile durch das Verfahren nach einem der Ansprüche 1 und 2 verbunden sind.

4. Kettenglied nach Anspruch 3, gebildet aus zwei Kettenhalbgliedern (1), deren Enden einander paarweise gegenüberliegen, wobei die beiden Kettenhalbglieder durch zwei Halbschalen (2) derart verbunden sind, daß sich eine Brücke (9) in der Öffnung des Kettengliedes bildet.

5. Kettenglied nach Anspruch 3, gebildet aus einem offenen Ring (10), dessen zwei einander gegenüberliegende Enden durch zwei Halbschalen (15) verbunden sind.

6. Kettenglied nach einem der Ansprüche 3 bis 5, wobei jede Halbschale einen gegen die andere Halbschale gerichteten Vorsprung trägt, wobei die beiden Vorsprünge komplementär ausgebildet und beide von einem Verbindungsstift durchdrungen sind, und wobei jeder Vorsprung aus einem Element gebildet wird, das in ein Loch der jeweiligen Halbschale eingesetzt ist und durch Schmieden in diesem Loch gehalten wird.

7. Kettenglied nach Anspruch 6, wobei entweder die äußere Oberfläche besagten Elements oder die innere Oberfläche besagten Lochs Reliefs aufweisen, die beim Schmieden mittels Prägung auf die jeweils andere Oberfläche übertragen worden sind.

8. Verfahren zur Herstellung eines demontierbaren Kettengliedes zum Verbinden und Trennen von Kettenabschnitten, wobei besagtes Kettenglied wenigstens zwei einander gegenüberliegende Enden von Kettengliedteilen und zwei Halbschalen aufweist, die mittels Verbindungselementen miteinander verbunden sind, um besagte Enden zu verbinden, **dadurch gekennzeichnet, daß** es die folgenden Schritte umfaßt:
Ausbilden von Reliefs entweder auf der inneren Oberfläche der Halbschalen oder auf der äußeren Oberfläche der Enden der Kettengliedteile,
Erzeugen eines Loches durch jede der Halbschalen in denjenigen ihrer Abschnitte, die einander gegenüberliegen sollen,
Ausbilden von zwei komplementären Halb-Verbindungselementen, die je ein Ende aufweisen, das in eines der genannten Löcher eindringen kann,
Ausbilden von Reliefs entweder auf der inneren Oberfläche besagter Löcher oder auf der äußeren Oberfläche der Enden besagter Verbindungselemente,
Einsetzen jedes der genannten Enden der Verbindungselemente in eines der genannten Löcher und Aufsetzen der Halbschalen auf die Enden der Kettengliedteile,
Schmieden von Reliefs in die ursprünglich glatten, den vorgeformten Reliefs gegenüberliegenden Teile durch direkte Prägeeinwirkung auf besagte Reliefs,
Verbinden der Halbschalen durch einen Verbindungsstift, der zwei fluchtende Löcher durchdringt, die in einander überlappenden Teilen der Halb-Verbindungselemente ausgebildet sind.

9. Verfahren nach Anspruch 8, wobei besagte fluchtende Löcher nach dem Schmieden ausgebildet werden, und zwar ausgehend von außerhalb des Kettengliedes.

10. Verfahren nach Anspruch 8, wobei besagte Löcher vor dem Schmieden ausgebildet werden und dazu dienen, die Halb-Verbindungselemente vorläufig verbunden zu halten.

11. Verfahren nach einem der Ansprüche 8 bis 10 zum Herstellen eines Kettengliedes, das aus zwei Kettenhalbgliedern besteht, die zwei Paare von einander gegenüberliegenden Enden aufweisen, wobei man Reliefs entweder auf der inneren Oberfläche einer Hülse oder auf der äußeren Oberfläche der Enden des anderen Endenpaares bildet, wobei man ferner die genannten anderen Enden in die Buchse einsetzt, und wobei man diese anderen Enden gleichzeitig mit den erstgenannten Enden schmiedet.
